# EUROPEAN PATENT APPLICATION

(11) **EP 4 755 755 A2**
(43) Date of publication of application: **10.06.2026**
(21) Application number: 26174051.8
(22) Date of filing: 09.12.2020
(51) Int. Cl.: B62B 7/08

(54) **STROLLER CHASSIS**

(62) Divisional of application: 20212744.5
(71) Applicant: Thule Sweden AB, 335 04 Hillerstorp (SE)
(72) Inventor: ANDERSSON, Tommy, 333 93 Skeppshult (SE); HAK, Wilbert, 568 92 Skillingaryd (SE); PERSSON, Joakim, 56831 Skillingaryd (SE)
(74) Representative: Wallentin, Lars

(57) **Abstract**

Disclosed is a stroller chassis with a hub. The stroller chassis comprises a first frame assembly and a second frame assembly. The hub is configured to couple the first frame assembly to the second frame assembly pivotably about a pivot axis and releasably lockably with respect to each other. The hub is configured to detachably and lockably support a carrying structure on the chassis. The hub is configured to support the carrying structure relative to the chassis pivotably about the pivot axis and lockably in a rotational position. Also disclosed is a stroller chassis with a hub. The hub is configured to detachably and lockably support a carrying structure on the chassis. The hub is configured such that fully unlocking the carrying structure from said hub to allow detachment may be caused by operation of only one release member.

## Description

### TECHNICAL FIELD

The present disclosure relates generally to a stroller chassis for strollers. More precisely, the present disclosure relates to a stroller chassis with a specific hub.

### BACKGROUND

Strollers have been used for many years to transport children. Several strollers are known in the prior art, in particular such ones that allow folding them to a more compact size for stowing or transport purposes. Known strollers are, however, often cumbersome to handle for users. In particular, known strollers are especially difficult to handle for users that only have one hand available for handling purposes, for example in a situation in which the user holds a child in one arm. Furthermore, known strollers allow the fixation of different kinds of carrying structures, for example a child seat, a bassinet or a baby car seat. The carrying structures are either configured for direct attachment to the stroller hub or may be fixed to the stroller hub by means of one or more adapters. Parts of the locking arrangements for locking and unlocking the carrying structures are usually provided in the carrying structures and/or the adapters. The construction of such carrying structures and/or adapters is, therefore, complex as moving parts of the locking arrangements have to be provided in the carrying structures or adapters. There are also locking arrangements for mounting the carrying structures on the stroller hub, that have some drawbacks regarding safety. For example, locking arrangements are known that may be brought into a state in which the carrying structure is permanently unlocked from the hub although a child is still seated therein.

### SUMMARY

There is a need for an improved stroller chassis that at least addresses the above disadvantages. There is also a need for an improved stroller that can be folded, transported and/or stowed with only one hand.

According to the present disclosure, a stroller chassis according to independent claims 1 and 2 is provided. Advantageous further developments are subject of the dependent claims.

Other desirable features and characteristics will become apparent from the summary, detailed description, and the appended claims, taken in conjunction with the accompanying drawing figures.

According to the present disclosure, a stroller chassis with a hub is provided. The hub may comprise a first hub portion and a second hub portion. The first hub portion and the second hub portion may be arranged at a distance from each other. The first hub portion and the second hub portion may be configured to support a carrying structure between them. The carrying structure may comprise a seat structure and/or an adapter for coupling a seat structure to the hub. If the carrying structure is to be coupled to multiple hub portions, the number of adapters may correspond to the number of hub portions. A carrying structure may, thus, comprise a seat structure without adapter, a seat structure with one or more adapters, or one or more adapters without a seat structure.

The stroller chassis may comprise a first frame assembly and a second frame assembly. The hub may be configured to couple the first frame assembly and the second frame assembly pivotably about a pivot axis and releasably lockable with respect to each other.

The stroller chassis may further comprise a locking mechanism for releasably establishing locking between the first frame assembly and the second frame assembly. The locking mechanism may comprise an engaging member for blocking a movement of the second frame assembly relative to the first frame assembly. Furthermore, the locking mechanism may comprise a release mechanism for at least releasing an engagement between the first frame assembly and the second frame assembly. The release mechanism may be provided on the second frame assembly and may allow to remotely release an engagement between the first frame assembly and the second frame assembly. The release mechanism may be operatively coupled to the locking mechanism by means of a force transfer member. The force transfer member may comprise a wire. The second frame assembly may comprise a handle portion graspable by a user. The release mechanism may be provided in the handle portion.

The hub may be configured to detachably and lockably support a carrying structure on the chassis. As already described before, the hub may comprise a first hub portion and a second hub portion. The first hub portion and the second hub portion may be arranged at a distance from each other. The first hub portion and the second hub portion may be configured to support the carrying structure between them. The hub may be configured such that fully unlocking the carrying structure from the hub to allow a detachment of the same, may be caused by operation of only one release member. The hub may comprise a locking arrangement for releasably locking the carrying structure on the hub, for example on the first hub portion and the second hub portion. The locking arrangement may be configured such that a locking of the carrying structure on the hub, for example on the first hub portion and the second hub portion, can at least be simultaneously released. The locking arrangement may comprise a first engaging mechanism provided in the first hub portion. The locking arrangement may comprise a second engaging mechanism provided in the second hub portion. The locking arrangement may comprise a release member operable by a user. The release member may be configured to return to a locking position by means of a return mechanism, for example a return spring mechanism, comprising an urging member such as a spring for urging the release member towards the locking position such that the release member is normally positioned in the locking position. The release member may be operatively coupled to the first engaging mechanism and to the second engaging mechanism. The release member may be operatively coupled to the first engaging mechanism and the second engaging mechanism such that an operation of the release member simultaneously releases an engagement in both engaging mechanisms. For example, the release member may be operatively coupled to the first engaging mechanism and the second engaging mechanism by means of a force transfer mechanism. The force transfer mechanism may comprise an elongate member which is at least configured to transfer a pulling force. The force transfer mechanism may comprise a wire. The release member may be provided on one of the first hub portion and the second hub portion.

The hub may be configured to support the carrying structure relative to the chassis pivotably about the pivot axis and lockably in a rotational position. A first hub portion and a second hub portion that are both rotatable relative to the chassis may be provided.

The stroller chassis may further comprise a crossbar member. For example, the hub may comprise the crossbar member. The crossbar member may be configured to at least partially accommodate the force transfer mechanism. As already mentioned before, the force transfer mechanism may be a wire. Accordingly, the crossbar member may be configured to suitably guide the force transfer mechanism therein. In addition or alternatively, the crossbar member may comprise a gripping handle graspable by a user for carrying the stroller. In addition or alternatively, the crossbar member may be integrally formed with the first hub portion and the second hub portion. In addition or alternatively, the crossbar member may be U-shaped.

The hub may be configured to be positively couplable with a coupling portion of the carrying structure. In particular, the hub may be configured to be positively couplable with the coupling portion such that a movement of the hub and the coupling portion relative to each other for moving the same to a final coupling position is at least partially carried out against an urging force applied by an urging member.

As already mentioned before, the hub may comprise a first hub portion and a second hub portion. The first hub portion may be configured to be positively couplable with a first coupling portion of the carrying structure. The second hub portion may be configured to be positively couplable with a second coupling portion of the carrying structure. The coupling between the respective hub portion and the respective coupling portion may be provided such that a movement of the respective hub portions and the respective coupling portions relative to each other for moving the same to a final coupling position is at least partially carried out against an urging force applied by an urging member. Each of the first hub portion and the second hub portion may comprise an urging member. An urging member as described herein may comprise a spring mechanism. Each urging member may be configured to apply an urging force on a respective one of the coupling portions in decoupling direction.

The urging member may be configured to provide an urging force which is higher than the weight force of the carrying structure. In case multiple urging members are used, the urging members may be configured to jointly provide a joint urging force which is higher than the weight force of the carrying structure. With such a configuration, it is necessary to overcome the urging force to move the coupling portions relative to the hub portions to the final coupling position. On the other hand, such a configuration pushes up an unloaded carrying structure as soon as a locking between the carrying structure and the hub is released. Together with the above locking arrangement, a mechanism may be provided in which a loaded carrying structure is automatically locked and securely remains locked in case of a loaded carrying structure as is exemplarily described in the detailed description.

As already mentioned before, the hub may comprise a first hub portion and a second hub portion. Each of the first hub portion and the second hub portion may be arranged lockably rotatable relative to the chassis, for example about the pivot axis. In addition or alternatively, unlocking of the first hub portion and the second hub portion to allow a rotation of the same with respect to the chassis may be effected by a movement of one of the first frame assembly and the second frame assembly with respect to the other one about the pivot axis.

The stroller chassis may further comprise a locking arrangement for rotationally locking the hub, for example the first hub portion and the second hub portion, to at least one of the first frame assembly and the second frame assembly. Each locking arrangement may comprise an engaging portion. The engaging portion may be arranged on the first frame assembly. Each locking arrangement may comprise a receiving portion. The receiving portion may be arranged on the first hub portion and on the second hub portion, respectively. The engaging portion may be movable between an engaging position and a disengaging position. For example the engaging portion may be translatory movable. In the engaging position, the engaging portion may be in engagement with the receiving portion thereby blocking any rotational movement between the engaging portion and the receiving portion. In the disengaging position, the receiving portion is able to rotate about the pivot axis relative to the engaging portion. In addition or alternatively, the stroller chassis may further comprise a force transfer mechanism operatively coupled to the engaging portion to apply a force on the engaging portion for moving the same at least from the engaging position to the disengaging position. The force transfer mechanism may be configured to transfer a rotational movement of one of the first frame assembly and the second frame assembly about the pivot axis and relative to the other one of the frame assemblies, into a movement, for example a translatory movement, of the engaging portion.

The force transfer mechanism may comprise a cam surface. The cam surface may extend about the pivot axis. The engaging portion may comprise an abutment portion. The abutment portion may be configured to get in contact with the cam surface. The engaging portion may be pretensioned towards engagement by means of an urging member. The urging member may comprise a spring. The engaging portion may be configured for a play-free engagement. The engaging portion may comprise a wedge shape or a rounded shape. In addition or alternatively, the engaging portion may be arranged translatory movable in a direction which is skew to an extension direction of the pivot axis.

The hub may further comprise an abutment portion for orienting the first and second hub portions upon movement of one of the first frame assembly and the second frame assembly about the pivot axis. The abutment portion may be movably coupled to one of the first frame assembly and the second frame assembly. The abutment portion may be configured to get in contact with and apply a force on a force receiving portion provided on at least one of the first and second hub portions, to automatically move the first and second hub portions from a potentially unfavorable position to a favorable position. The unfavorable position may be a position in which a mounted carrying structure could interfere with portions of the stroller chassis during a folding process, in particular when the stroller chassis is folded and unfolded. The favorable position may be a position, in which a mounted carrying structure cannot interfere with portions of the stroller chassis. In this way, a mounted carrying structure can be at least pre-positioned relative to the chassis for a further rotation to an operating position. The abutment portion may be coupled to the second frame assembly so as to be integrally rotatable therewith about the pivot axis.

The abutment portion may be provided such that, when the first frame assembly and the second frame assembly are locked to each other, it defines a rotation stop for the first and second hub portions such that the receiving portion is aligned with the engaging portion when the first and second hub portions are rotated such that the force receiving portion is in contact with the abutment portion. Accordingly, an especially play-free locking may be achieved by the cooperation of the abutment portion acting as a stop in one rotational direction of the hub portions and the engaging portion acting as a stop at least in the other rotational directions of the hub portions.

Further provided is a stroller comprising a stroller chassis according to one of the preceding claims and a carrying structure detachably mountable to the hub.

Other features of the present invention will be apparent from consideration of the information contained above as well as in or in combination with the following detailed description, drawings and claims.

### BRIEF DESCRIPTION OF THE DRAWINGS

The accompanying drawings, which are incorporated herein and form part of the specification, illustrate embodiments and, together with the description, further serve to explain the principles of the embodiments and to enable a person skilled in the art to make and use the embodiments.
Figure 1 shows a perspective view of a stroller comprising a stroller chassis and a carrying structure mounted to the chassis according to an embodiment.
Figure 2 shows a further perspective view of the stroller of Figure 1 wherein the carrying structure is shown in a dismounted state.
Figure 3 shows a side view of coupling portion of the carrying structure as shown in Figures 1 and 2.
Figure 4 shows a side view of the stroller in which the carrying structure is oriented in rearward direction and in which the carrying structure is in a folded state in which the backrest and a bumper bar of the carrying structure are folded towards a seat base, and in which the stroller chassis is in an unfolded operating state.
Figure 5 shows a perspective view of the stroller of Figure 1 in which the carrying structure is oriented in forward direction and in which the carrying structure is in a folded state in which the backrest and the bumper bar are folded towards the seat base, and in which the stroller chassis is in a folded stowing or carrying state.
Figure 6 shows a perspective view of a hub of the stroller chassis according to an embodiment.
Figure 7 shows a front view of the hub of Figure 6.
Figure 8 shows a side view of interior components of the hub according to an embodiment, wherein the stroller chassis is in an unfolded state.
Figure 9 shows interior components of the hub of Figure 8 wherein frame assemblies coupled by the hub are already rotated with respect to each other. The state as shown in Figure 9 may be referred to as intermediate folding state as Figure 9 shows a state which occurs during transferring the stroller chassis from the unfolded state to the stowed state.
Figure 10 shows a perspective view of a hub portion according to an embodiment.
Figure 11 shows a plan view of the hub portion of Figure 10 with further components of the hub of the stroller chassis.
Figure 12 shows a sectional view through a hub portion according to an embodiment.
Figures 13 and 14 show sectional views through a hub portion according to an embodiment wherein Figure 13 shows a state in which a coupling portion of a carrying structure is locked to the hub portion and Figure 14 shows a state in which the coupling portion of the carrying structure is unlocked from the hub portion.
Figure 15 shows an exploded view of components of a hub according to an embodiment.

The features and advantages of the embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION OF EMBODIMENTS

Embodiments and modifications will be described in the following with reference to the drawings.

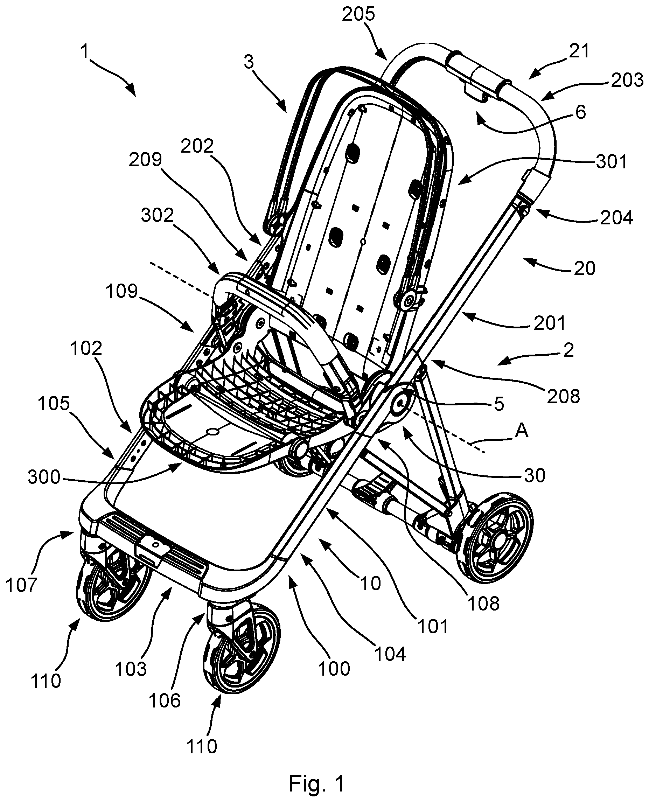

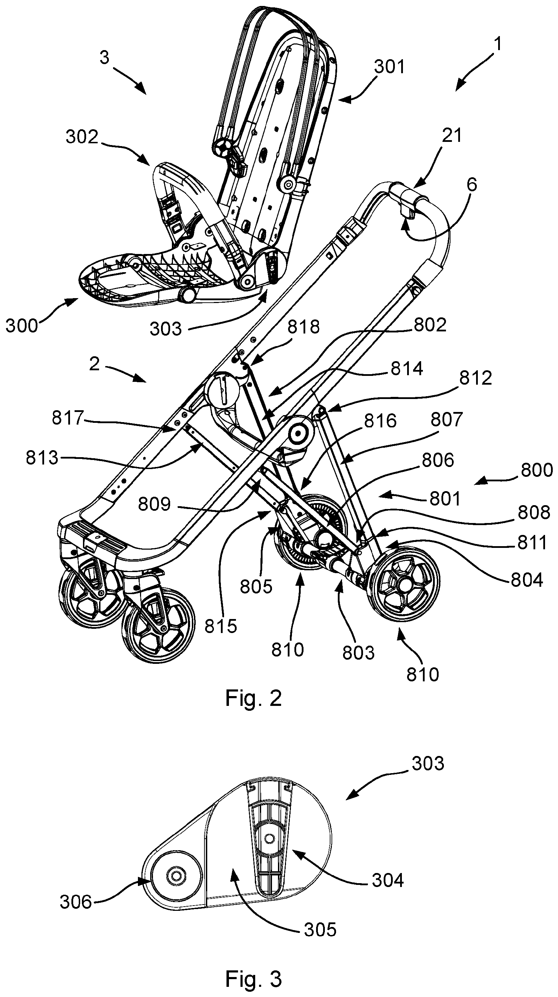

Figures 1 and 2 show a stroller 1. The stroller 1 comprises a stroller chassis 2 and a carrying structure 3. In some embodiments, the carrying structure 3 is embodied as or comprises a seat structure configured to support a child. Therefore, the carrying structure 3 will also be referred to as seat structure 3 in the following. It is, however, noted that the carrying structure 3 does not necessarily have to comprise a seat structure. Instead, the carrying structure may in addition to the seat structure or alternatively to the seat structure comprise an adapter allowing to fix a seat structure thereon. The stroller chassis 2 comprises a hub 30.

In some embodiments, the hub 30 comprises multiple functions that are integrated in the hub 30. More precisely, according to the embodiment, the hub 30 combines at least three functions. A first function may be a detachable fixation of the seat structure 3 on the stroller chassis 2. A second function may be a rotatable fixation of the seat structure 3 on the stroller chassis 2. A third function may be the ability of the hub 30 to couple portions of the stroller chassis 2 to each other such that they are pivotable about a pivot axis and releasably lockable with respect to each other. A further function which may be provided in addition or alternatively to one of the before mentioned functions may be the function that the hub 30 may be configured such that an unlocking of the seat structure 3 from the hub may be achieved by an operation of a single release member. All of the above-mentioned possible functions will be described below in greater detail. It is noted that the present disclosure is not limited to any of the above combinations of functions. It is possible to combine the above-mentioned functions in a suitable manner. In some embodiments, only one function of the above functions may be provided. In other embodiments, two or more functions of the above-mentioned functions may be provided. Furthermore, features of the stroller 1 as described in the following may be suitably combined and are not limited to any of the combinations that will be explained below by way of exemplary embodiments.

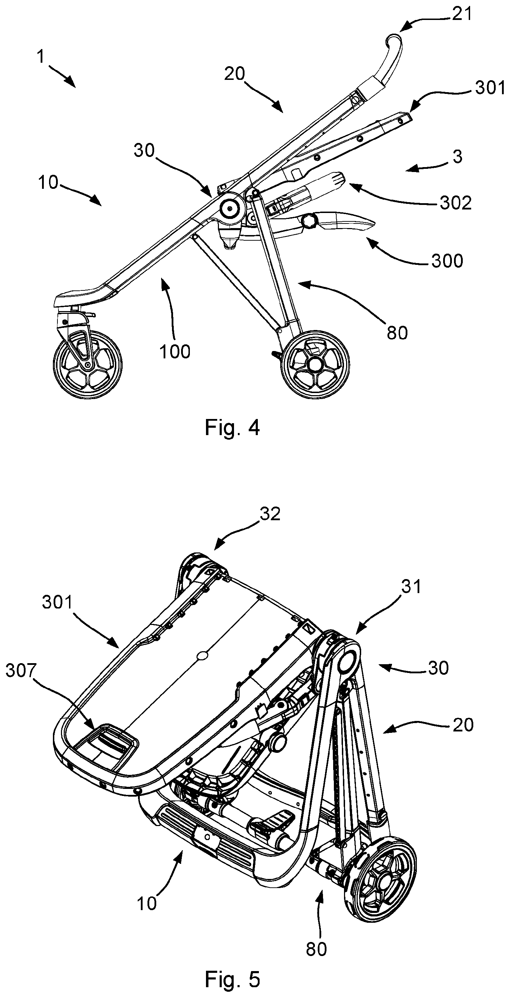

The seat structure 3 may comprise a base portion 300. The base portion 300 may be configured to support a bottom of the child. The seat structure 3 may comprise a coupling portion 303 for coupling the seat structure 3 to the stroller chassis 2. The seat structure may be an integral part of the seat structure 3. The coupling portion may comprise an or be configured as an adapter for coupling the seat structure 3 to the hub 30. The seat structure 3 may further comprise a backrest portion 301. The backrest portion 301 may be pivotably coupled to the base portion 300 by means of a coupling portion 303 which may also be referred to as seat hub. A safety bar arrangement 302 may be hingedly coupled to the coupling portion 303. The safety bar arrangement 302 may also be referred to as bumper bar and may be provided to form an openable and closable crossbar arrangement for securely holding the child within seat structure 3. In the embodiment, the backrest portion 301 and the safety bar arrangement 302 may be pivotably coupled to the coupling portion 303 so as to allow folding of the backrest portion 301 and the safety bar arrangement 302 towards the base portion 300 for stowing purposes. A folded state of the seat structure 3 is shown in Figure 4 and Figure 5.

Figure 3 shows a side view of the coupling portion 303 of the seat structure 3. The coupling portion 303 may comprise a support 305 as well as a first coupling section 304 for coupling the seat to the above-mentioned hub 30, and a second coupling section 306 for pivotably mounting the safety bar arrangement 302. The first coupling section 304 may comprise a wedge like shape and may be configured to be inserted into a recess 33 provided in the hub 30. The seat structure 3 may further comprise a locking mechanism for arresting the backrest 301 and the safety bar arrangement 302 at an angle relative to the base portion 300. For unlocking the locking mechanism, an operating member 307 is provided in an upper end portion of the backrest portion 301 as is shown in Figure 5. The operating member 307 is operatively coupled to a locking arrangement inside the coupling portion 303 and unlocks the backrest portion 301 so as to be rotatable relative to the coupling portion 303. The locking mechanism is further configured such that a locking of the safety bar arrangement 302 is released when the backrest portion 301 reaches a predetermined rotational position upon folding the same towards the base portion 300. Accordingly, by unlocking the backrest portion 301 through operation of the operating member 307 and rotating the backrest portion 301 towards the base portion 300, the safety bar arrangement 302 is unlocked and then also able to rotate towards the base portion 300. In this way, it is possible to fold the main components of the seat structure 3 so as to achieve a compact size.

The stroller chassis 2 may comprise a first frame assembly 10 and a second frame assembly 20. The first frame assembly 10 may define a supporting structure for mounting a front wheel assembly 110. The first frame assembly 10 may comprise a frame 100. The frame 100 may be configured U-shaped and may in particular comprise multiple elongate members coupled to each other. The elongate members may at least partially comprise profiles, for example extruded profile made from aluminum. In the embodiment as shown in Figure 1, the frame 100 comprises a first elongate side member 101, a second elongate side member 102, as well as an elongate cross member 103. The elongate cross member 103 couples a first end portion 104 of the first elongate side member 101 to a first end portion 105 of the second side member 102. In the embodiment, the elongate side members 101, 102 and the elongate cross member 103 extend substantially in a plane. The elongate cross member 103 comprises mounting sections 106, 107 each configured for supporting a wheel assembly 110. Although two wheel assemblies 110 are shown in the embodiment, it is also possible to provide only one will assembly on the first frame assembly 10.

A second end portion 108 of the first elongate side member 101 and a second end portion 109 of the second elongate side member 102 are hingedly coupled to the second frame assembly 20 by means of the hub 30. In the embodiment, the first frame assembly 10 is coupled to the second frame assembly 20 pivotably about a pivot axis A.

The second frame assembly 20 may comprise a frame 200. The frame 200 may be configured U-shaped and may in particular comprise multiple elongate members coupled to each other. The elongate members may at least partially comprise profiles, for example extruded profiles made from aluminum. In the embodiment of Figure 1, the frame 200 comprises a first elongate side member 201, a second elongate side member 202, and an elongate cross member 203. The elongate cross member 203 couples a first end portion 204 of the first elongate side member 201 to a first end portion 205 of the second side member 202. In the embodiment, the elongate side members 201, 202 and the elongate cross member 203 extend substantially in a plane. A second end portion 208 of the first elongate side member 201 and a second end portion 209 of the second elongate side member 202 are hingedly coupled to the first frame assembly 10 by means of the hub 30. The handle portion 21 may be provided on the elongate cross member 203. Furthermore, a release mechanism 6 may be provided on the elongate cross member 203. In use, the elongate cross member 203 is grasped by a user to push the stroller 1.

As is already indicated in Figure 1, the stroller chassis 2 further comprises a locking mechanism 5 for releasably establishing locking between the first frame assembly 10 and the second frame assembly 20. More precisely, the locking mechanism 5 is configured to releasably lock the first frame assembly 10 and the second frame assembly 20 when the stroller chassis 2 is in an unfolded state as is shown for example in Figure 1 and in Figure 2. Details of the locking mechanism 5 will be described later in greater detail. The release mechanism 6 is operatively coupled to the locking mechanism 5. Further details regarding the release mechanism 6 and its connection to the locking mechanism 5 will be given later.

The first frame assembly 10 and the second frame assembly 20 may be configured and arranged such that in an unfolded state of the stroller chassis 2, the first frame assembly 10 and the second frame assembly 20 extend substantially in one plane and form a substantially rectangular frame allowing to receive the seat structure 3 therein.

The stroller chassis 2 may further comprise a third frame assembly 80. The third frame assembly 80 may be configured to provide a rear support of the stroller chassis 2 against the ground. For example, the third frame assembly 80 may be configured to support rear wheel assemblies 810 thereon. The third frame assembly 80 may comprise a frame 800. The frame 800 may be configured U-shaped and may in particular comprise multiple elongate members coupled to each other. The elongate members may at least partially comprise profiles, for example extruded profiles made from aluminum. As is for example shown in Figure 2, the frame 800 may comprise a first side portion 801, a second side portion 802, as well as an elongate cross member 803. The elongate cross member 803 may couple a first end portion 804 of the first side portion 801 to a first end portion 805 of the second side portion 802. The elongate side portions 801, 802 and the elongate cross member 803 may extend substantially perpendicular to each other.

The first side portion 801 may comprise a first front elongate member 806 and a first rear elongate member 807. The first end portion 804 may be configured as a coupling member. The first front elongate member 806 is hingedly coupled to the first end portion 804 at a first end portion 808 thereof. The first rear elongate member 807 is fixedly coupled to the first end portion 804 at a first end portion 811 thereof. The first front elongate member 806 is hingedly coupled to the first frame assembly 10 at a second end portion 809 thereof, more precisely to the first elongate side member 101 at a predetermined distance from the pivot axis A. The first rear elongate member 807 is hingedly coupled to the second frame assembly 20 at a second end portion 812 thereof, more precisely to the first elongate side member 201 at a predetermined distance from the pivot axis A.

The second side portion 802 may comprise a second front elongate member 813 and a second rear elongate member 814. The first end portion 805 of the second side portion 802 may be configured as a coupling member. The second front elongate member 813 may be hingedly coupled to the first end portion 805 at a first end portion 815 thereof. The second rear elongate member 814 may be fixedly coupled to the first end portion 805 at a first end portion 816 thereof. The second front elongate member 813 is hingedly coupled to the first frame assembly 10 at a second end portion 817 thereof, more precisely to the second elongate side member 102 at a predetermined distance from the pivot axis A. The second rear elongate member 814 is hingedly coupled to the second frame assembly 20 at a second end portion 818 thereof, more precisely to the second elongate side member 202 at a predetermined distance from the pivot axis A.

In general, the third frame assembly 80 comprises a kinematic which allows to pivotably move the elongate cross member 803 as well as any wheel assembly 810 towards the first frame assembly 10 for bringing the stroller chassis 2 into a folded state. Such a movement may be initiated by a movement of the second frame assembly 20 owing to the above-described connection of the third frame assembly 80 to the second frame assembly 20. In a folded state of the stroller chassis 2, the third frame assembly 80 may be sandwiched between the first frame assembly 10 and the second frame assembly 20.

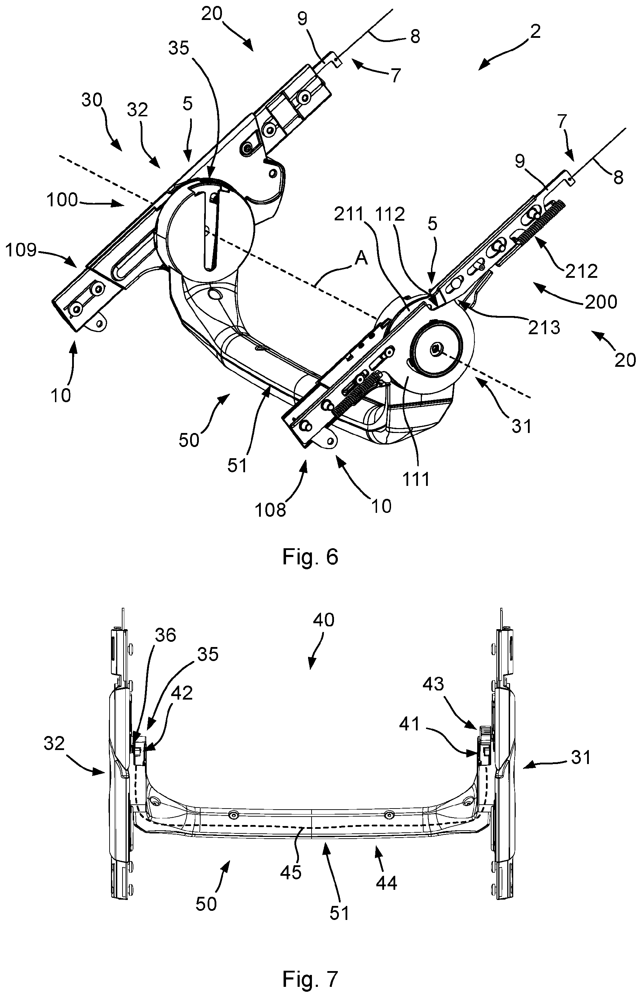

As mentioned before, the stroller chassis 2 may comprise a hub 30 which is configured to couple the first frame assembly 10 to the second frame assembly 20 pivotable about a pivot axis A and releasably lockably with respect to each other. For that, the locking mechanism 5 is provided. Details of the locking mechanism 5 will now be described with reference to Figure 6.

Figure 6 shows a perspective view of a hub 30 according to an embodiment. The hub comprises a first hub portion 31 and a second hub portion 32. The first hub portion 31 and the second hub portion 32 are arranged at a distance from each other in an extension direction of the pivot axis A, for example in cross direction of the stroller 1. The hub portions 31, 32 may be configured to support the seat structure 3 between them, for example in a hanging manner. The first hub portion 31 and the second hub portion 32 may be coupled to each other by means of a crossbar member 50. The crossbar member 50 may comprise a gripping handle 51 to allow a user to grasp the gripping handle 51 and carry a folded stroller 1 either with a mounted seat structure 3 or without such a seat structure mounted to the hub 30. Each of the first hub portion 31 and the second hub portion 32 may be configured to be coupled to a coupling portion 303 of a seat structure 3 as already mentioned before. Each of the first hub portion 31 and the second hub portion 32 may therefore comprise the recess 33 for receiving a first coupling section 304.

The hub 30 couples the first frame assembly 10 to the second frame assembly 20 pivotably about the pivot axis A. Each of the second end portion 108 and the second end portion 109 of the frame 100 of the first frame assembly 10 may comprise a coupling section 111 which is pivotably mounted on the hub 30. Each of the second end portion 208 and the second end portion 209 of the frame 200 of the second frame assembly 20 may comprise a coupling section 211 which is pivotably mounted on the hub 30. Each of the coupling section 111 and the coupling section 211 may be coupled to each other by means of a pivot pin 34. Each of the coupling section 111 and the coupling section 211 may be arranged next to each other along the pivot axis A such that they are in sliding contact. Each of the coupling section 111 and the coupling section 211 may be formed substantially flat at least in a region in which the coupling section 111 and the coupling section 211 may get in contact with each other. The coupling section 111 and the coupling section 211 may be formed from a metal sheet by cutting and bending. The coupling section 111 and the coupling section 211 may be locked to each other by means of the locking mechanism 5. The locking mechanism 5 may function by a cooperation of an engagement portion 112 provided in the coupling section 111 and an engaging member 9 movably provided on the coupling section 211, for example in a guiding recess 214, and comprising an engaging portion 213 engageable with the engagement portion 112. The engaging member 9 may be prebiased by means of an urging member 212 exemplary embodied as a spring in engaging direction. In this way, the locking mechanism 5 may be configured to automatically engage with the coupling section 111 as soon as the engaging portion 211 and the engagement portion 112 are aligned with respect to each other by rotating the second frame assembly 20 relative to the first frame assembly 10. The engaging member 9 may be configured so as to be remotely operable. For that, the engaging member 9 may be operatively coupled to the release mechanism 6. In the embodiment, the engaging member 9 is operatively coupled to the release mechanism 6 by means of the force transfer member 7. In the embodiment, the force transfer member 7 is a wire 8. However, other types of force transfer members 7 may be used. The release mechanism 6 may comprise an operating member, for example a pushbutton. In an alternative configuration, the operating member may comprise a rotatable handle. In the present embodiment, the locking mechanism 5 is configured such that upon operation of the release mechanism 6 the engaging member 9 is disengaged from the engagement portion 112 against an urging force of the urging member 212. As soon as the engaging member 9, more precisely an engaging portion 213 thereof, is out of engagement with the engagement portion 112, the first frame assembly 20 is rotatable about the pivot axis A and folding of the stroller chassis 2 is possible.

The hub 30 may comprise a locking arrangement 40. Figure 7 schematically shows a possible configuration of such a locking arrangement 40. The locking arrangement 40 may be configured to releasably lock the carrying structure 3, for example a seat structure as described herein or an adapter configured to adapt the hub to a specific seat structure dimension, on the hub 30. If the hub 30 comprises a first hub portion 31 and a second hub portion 32, the locking arrangement 40 may be configured to releasably lock the seat structure 3 on the first hub portion and the second hub portion 32. The locking arrangement 40 may be configured such that a locking of the seat structure 3 on the first hub portion 31 and the second hub portion 32 can at least be simultaneously released. In this way, it is possible for a user to unlock a seat structure 3 simultaneously from both the first hub portion 31 and the second hub portion 32 by means of a single operating member. In other words, a one side operation for two hub portions 31, 32 and two locking mechanisms 41, 42 may be provided. For that, the locking member may comprise a release member 43 which is operable by a user. The locking arrangement 40 may comprise a first engaging mechanism 41 provided in the first hub portion 31 and a second engaging mechanism 42 provided in the second hub portion 32. The first engaging mechanism 41 and the second engaging mechanism 42 may be operatively coupled to each other by means of a force transfer mechanism 44, for example a wire 45 or any other member that may be used for transferring a pulling force.

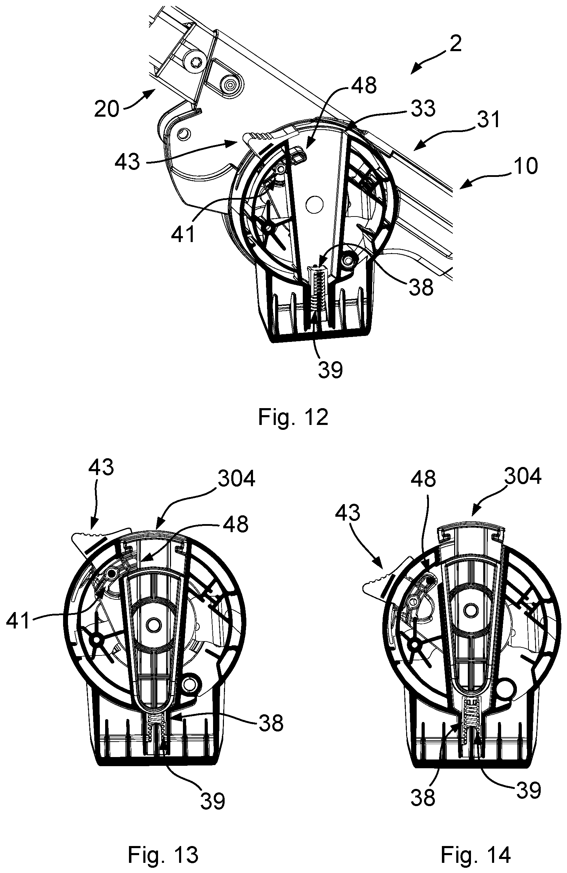

Further details of the locking arrangement 40 and in particular of the first engaging mechanism 41 and the second engaging mechanism 42 will now be described with reference to Figures 12 to 14. Figures 12 to 14 show sectional views of the first engaging mechanism 41. It is noted that the construction of the second engaging mechanism 42 is similar to the construction of the first engaging mechanism 41 and differs from the same in that the second engaging mechanism 42 does not comprise a release member 43 and is consequently not actively operable by a user. By contrast, the second engaging mechanism 42 is only operable through an operation of the first engaging mechanism 41. A further difference between the first engaging mechanism 41 and the second engaging mechanism 42 may be that an indicating portion 35 may be provided in the second engaging mechanism 42. The indicating portion 35 serves the purpose to signalize to a user whether a seat structure 3 is correctly inserted and locked in the hub 30 or second hub portion 32. While the first hub portion 31 or the first seat engaging mechanism 41 may also comprise such an indicating portion, it is noted that such an additional indicating portion may be omitted since a user may already be able to determine a correct insertion and locking based on the position of the release member 43.

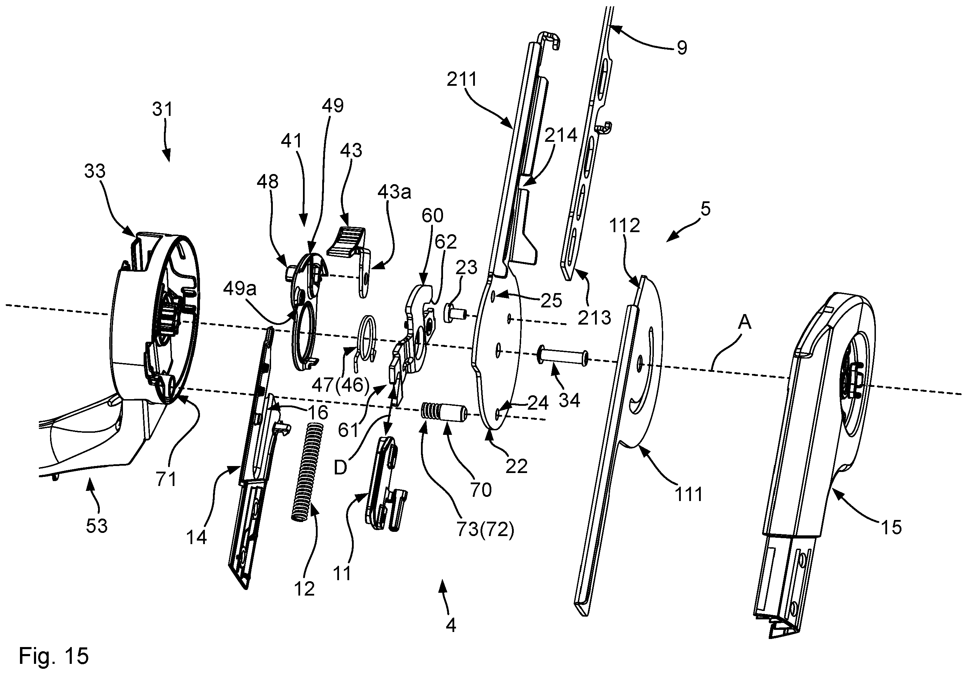

Each of the first engaging mechanism 41 and the second engaging mechanism 42 may comprise a support member 49 which is arranged rotatable about the pivot axis A. The support member 49 may be configured as a thin member which may comprise a plate like or disk like shape. An engaging portion 48 is provided on the support member 49. The support member 49 may be configured to automatically return to a locking position by means of a return mechanism 46 (see Figure 15). The return mechanism 46 may comprise a return spring 47. In the first engaging mechanism 41, the release member 43 may be fixedly coupled to the support member 49, for example by means of a metal reinforced coupling member 43a. Accordingly, a movement of the release member 43 leads to a movement of the support member 49. In the second engaging mechanism 42, the release member 43 may be omitted. In the second engaging mechanism 42, the above-mentioned indicating portion 35 may be provided. The indicating portion 35 may comprise an indicating member or indication section which may be for example provided on a radially outer surface of the support member 49. The indicating section may be colored, for example in green color. In order to allow an easier manufacturing, the support member 49 in the second engaging mechanism 42 may be manufactured in green color. An opening 36 may be provided in the hub portion 32. The opening 36 may be provided such that the indication section, for example a portion on the support member 49, may be aligned with the same thereby indicating a user that the support member 49 is in the correct position.

In order to provide for a simultaneous movement of the support members 49 in the first engaging mechanism 41 and the second engaging mechanism 42, the force transfer mechanism 44 may operatively couple the support members 49 to each other such that they are movably coupled. In this way, a movement of one of the support members 49 leads to a movement of the other one of the support members 49. As can be gathered from Figure 12, the locking arrangement 40 may be configured such that the engaging portion 48 may be moved from an engaging position in which it protrudes into the recess 33 to a retracted position in which it does not protrude into the recess 33. Figure 12 and Figure 13 show a state of the first engaging mechanism 41 in which the engaging portion 48 is in the engaging position. Figure 13 shows an arrangement in which a coupling section 304 of the seat structure 3 is inserted in the recess 33 and engaged by the engaging portion 48. In such a state, the coupling section 304 is locked to the hub portion. On the other hand, Figure 14 shows a state in which the engaging portion 48 is in the retracted position so that the coupling section 304 is unlocked from the hub portion and may be detached.

A further feature which may be provided in the hub 30, for example the first hub portion 31 and the second hub portion 32, can also be gathered from Figures 12 to 14. As is already described above, the hub 30 may be configured to be positively couplable with the coupling portion 303 of the carrying structure 3. In some embodiments, the hub 30 may be configured to be positively couplable with a coupling portion 303 of the seat structure 3 in such a manner that a movement of the hub 30 and the coupling portion 303 relative to each other for moving the same into a final coupling position, for example a final coupling position as is shown in Figure 13, is at least partially carried out against an urging force applied by an urging member 38. Each of the first hub portion 31 and the second hub portion 32 may comprise such an urging member 38. The urging member 38 may comprise a spring 39. The urging member 38 may be provided in an end portion of the recess 33 opposite to an insertion opening of the recess 33. Each urging member 38 is configured to apply an urging force on a respective one of the coupling sections 304 in decoupling direction. The decoupling direction may be a direction which is perpendicular to the pivot axis A. The urging member 38 may be configured to provide an urging force which is higher than the weight force of the seat structure 3 so that the urging force needs to be overcome to move the coupling sections 304 of the seat structure 3 relative to the hub portions 31, 32, in particular with respect to the recess 33, to the final coupling position as is shown in Figure 13. Figure 14 shows a state in which the coupling section 304 gets in initial contact with one of the urging members 38. With such a configuration, it is necessary for the user to apply a certain force for bringing the seat structure 3 to the final coupling position. Another effect of such a configuration is that if the seat structure 3 is unlocked from the hub portions 31, 32 by operating the release member 43, the seat structure 3 may be automatically pushed upwards in decoupling direction if the seat structure 3 does not support a child. The seat structure 3 may thus be automatically moved from a locking position to an unlocking position. In the unlocking position, an opening in the coupling section, which is configured to receive the engaging portion 48, is offset with respect to the engaging portion so that the same cannot get in engagement with the coupling section 304. On the other hand, if a child is seated in the seat structure 3 and, thus, the weight force acting on the hub portions is higher than the own weight of the seat structure 3, the seat structure 3 will not be moved upwards to the unlocking position even if the release member 43 is operated. In other words, a loaded seat structure 3 will remain in place. It follows that the coupling section 304, for example including an opening, remains in position for an engagement with the engaging portion 48. If the support member 49 is configured to automatically return to a locking position by means of a return mechanism 46, there cannot be a state in which the seat structure 3 is accidentally in an unlocked state due to erroneous operation of the release member 43 as the same would return to its locking position. Consequently, the locking arrangement may provide enhanced safety by providing an arrangement in which a loaded seat structure is automatically locked and may only be removed if a force for releasing the locking mechanism (operating force applied on the release member 43) is continuously applied, or if the seat structure is itself unloaded so that it may be pushed up by the urging members 38 to the unlocking position. It is noted that the recess 33 may comprise a shape which corresponds to the shape of the coupling section 304. As already mentioned before, the first coupling section 304 may comprise a wedge like shape and may be configured to be inserted into the recess 33. In this case, the recess 33 may comprise a funnel or hopper shape. It is noted that the use of the above-described urging members 38 does not necessarily have to be combined with the locking arrangement 40 as described before. Such urging members 38 may also be used in locking arrangements in which a locking in each hub portion is manually released by operation of multiple release members, for example one on each hub portion.

The force transfer mechanism may comprise a wire 45. It is possible to use other members that allow to transfer a force, for example a pulling force. Also, the force transfer mechanism 44 may comprise a rigid member, for example an elongate bar. End portions of the force transfer mechanism, for example end portions of the wire 45, may be coupled to a first engaging mechanism 41 and a second engaging mechanism 42. The first engaging mechanism 41 may be provided on the first hub portion 31 and the second engaging mechanism may be provided on the second hub portion 32. For example, the end portions may be coupled to the above-mentioned support members 49, respectively, so that a movement of one of the support members leads to a corresponding movement of the other one. In Figure 15, an embodiment is shown in which the support member 49 comprises a coupling section 49a for fixing an end portion of a wire in a manner that a rotation of the support member 49 in unlocking direction pulls on the wire. A corresponding arrangement may be provided in the second engaging mechanism with the difference that the wire is coupled to the support member such that the support member is moved in unlocking direction when the wire is pulled by a movement of the support member 49 in the first engaging mechanism 41.

As mentioned before, the hub 30 may comprise the crossbar member 50. The crossbar member 50 may add rigidity to the overall stroller chassis 2. The crossbar member 50 at least partially extends in parallel with the pivot axis A. The crossbar member 50 may be configured to at least partially accommodate the force transfer mechanism 44 of the locking arrangement 40. In this way, the force transfer mechanism may be concealed in the stroller chassis 2. The crossbar member 50 may be configured to suitably guide the force transfer mechanism 44 therein.

In addition or alternatively, the crossbar member 50 may be integrally formed with the first hub portion 31 and the second hub portion 32 so that portions of the hub portions and of the crossbar member may be produced as a single part, for example by means of injection molding. Alternatively, the crossbar member 50 may be a separate member which is fixedly coupled to the first hub portion 31 and the second hub portion 32 so as to be integrally movable with the hub portions. If the crossbar member is integrally rotatable with the first hub portion 31 and the second hub portion 32, rotating a seat structure 3 mounted on the hub portions leads to a rotation of the crossbar member 50. In this way, the crossbar member 50 may be rotated together with the seat structure 3 such that when folding said stroller 1, the crossbar member 50 may be automatically moved or rotated to a position which is suitable for grasping the crossbar member 50 and carrying the folded stroller 1. In some embodiments, a crossbar member 50 is provided that in addition or alternatively to the above possible features of the crossbar member 50 may comprise a gripping handle 51 specifically designed to be graspable by a user for carrying the stroller 1.

In addition or alternatively, the crossbar member 50 may be U-shaped. For example, the crossbar member 50 may be configured such that it mainly extends in parallel to the pivot axis A and in a predetermined distance from the pivot axis A. In this way, a seat structure may be mounted such that part of the same, for example part of the base portion 300, is located below the pivot axis A. In other words, part of the seat structure 3 may be accommodated in the U-shape of the crossbar member 50. In this way, the center of gravity is lowered.

The hub 30 may be configured such that a seat structure 3 coupled thereto may be lockably rotatable relative to the stroller chassis 2 about the pivot axis A. For that, the first hub portion 31 and the second hub portion 32 may be arranged lockably rotatable relative to the chassis 2 about the pivot axis A. In addition or alternatively, the unlocking of the first hub portion 31 and the second hub portion 32 to allow a rotation of the same may be effected by a movement of one of the first frame assembly 10 and the second frame assembly 20 with respect to the other one of the first and second frame assemblies 10, 20 about the pivot axis A.

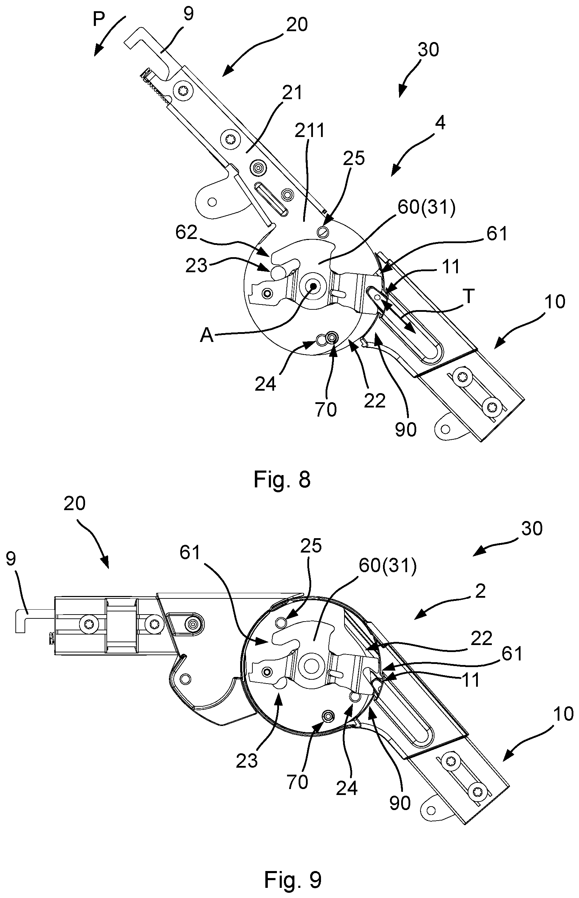

The stroller chassis 2 may comprise a locking arrangement 4 for rotationally locking the hub 30, for example each of the first hub portion 31 and the second hub portion 32 to at least one of the first frame assembly 10 and the second frame assembly 20. The locking arrangement 4 and its function will be described with reference to Figures 8 to 11. The locking arrangement 4 may comprise an engaging portion 11. In some embodiments, the engaging portion 11 may be arranged on the first frame assembly 10 and may be received in a recess 16 of an inner housing portion 14. The inner housing portion 14 may together with an outer housing portion 15 form a housing for components of the locking arrangement 4. The locking arrangement 4 may further comprise a receiving portion 61. The receiving portion 61 may be arranged on the first hub portion 31 and the second hub portion 32, respectively. For example, the receiving portion 61 may be a portion of a support member 60 fixedly coupled to a respective hub portion, for example by screwing. The receiving portion 61 may be integrally formed with the support member 60. The receiving portion 61 may comprise a recess for at least partially receiving the engaging portion 11. The engaging portion 11 is movably arranged, for example translatory movably arranged, between an engaging position and a disengaging position. In the engaging position, the engaging portion 11 is in engagement with the receiving portion 61 thereby blocking any rotational movement between the engaging portion 11 and the receiving portion 61. In the disengaging position, the receiving portion 61 is able to rotate about the pivot axis A relative to the engaging portion 11.

The locking arrangement 4 may in addition or alternatively comprise a force transfer mechanism 90 operatively coupled to the engaging portion 11 to apply a force on the engaging portion 11 for moving the same at least from the engaging position to the disengaging position. The force transfer mechanism 90 may be configured to transfer a rotational movement P of one of the first frame assembly 10 and the second frame assembly 20 about the pivot axis A and relative to the other one of the frame assemblies, into a movement T, for example a translatory movement, of the engaging portion 11.

The force transfer mechanism 90 may comprise a cam surface 22 extending about the pivot axis A. The cam surface 22 may be provided on the above-mentioned coupling section 211 and such that it may face the engaging portion 11. The cam surface 22 may be oriented in a direction facing away from the pivot axis A. The engaging portion 11 may comprise an abutment portion 13 configured to get in contact with the cam surface 22 and to ride thereon. The engaging portion 11 may be pretensioned towards engagement by means of an urging member 12, for example a spring. The cam surface 22 may be configured such that a distance between a contact area of the same aligned with the engaging member 11, and the pivot axis A is variable with a rotation of the second frame member 20 about the pivot axis A. In this way, the engaging member 11 may be pushed by the cam surface to move in disengaging direction. Figure 9 shows a state in which the engaging member 11 is already pushed out of the receiving portion 61 to a certain extent due to a relative movement of the cam surface 22 relative to the engaging member 11. With a further rotation of the second frame assembly 20 in counterclockwise direction in Figure 9, in other words in folding direction, the cam surface 22 will be positioned such that the engaging member 11 is fully moved out of the receiving portion 61. In such a state, the hub portion is free to rotate about the pivot axis A.

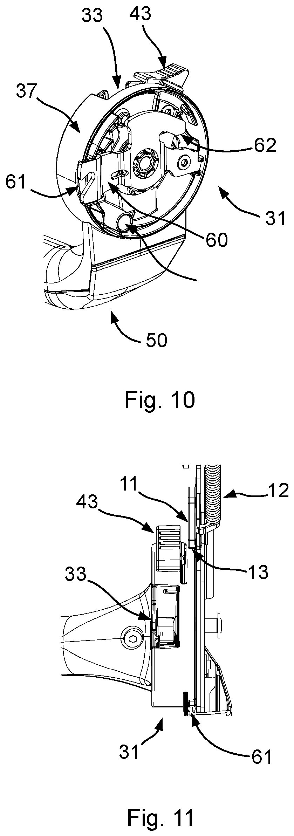

Figure 11 shows a state in which the first hub portion 31 was rotated relative to the chassis 2. The abutment portion 13 of the engaging member 11 is in contact with an outer surface portion 37 of the first hub portion 31 and the receiving portion 61 is located at a different rotational position. The first hub portion 31 is therefore rotatable about the pivot axis A with the abutment portion 13 contacting the outer surface portion 37. If the stroller chassis 2 is folded, the second frame assembly 20 is at a position relative to the first frame assembly in which the cam surface 22 is rotated to a position in which the engaging portion is prevented from entering the receiving portion 61. For example, the cam surface 22 may be positioned such that a surface portion thereof is arranged at a radial distance from the pivot axis A which is greater than a distance of an opening of the receiving portion 61 from the pivot axis A. Accordingly, as long as the stroller chassis 2 is folded, the engaging member 11 cannot enter the receiving portion. For example, the cam surface 22 may provide a surface that bridges the receiving portion 61 or an opening thereof in the hub portion. Accordingly, it is possible to rotate the hub portion beyond a position at which the insertion direction engaging member 11 and the receiving portion 61 are rotationally aligned, to normally engage with each other. On the other hand, if the chassis 2 is in an unfolded configuration as for example shown in Figures 1, 2, 6 and 8, the cam surface 22 is rotated to a position such that it does not block the engaging member 11 from entering the receiving portion 61. In such a configuration, the engaging member may snap into the receiving portion when the hub portion is rotated to a position in which the engaging member and the receiving portion 61 are aligned.

The receiving portion 61 and the coupling section 211 may comprise a plate like or disc like portion rotatable about the pivot axis A and arranged adjacent to each other in an extension direction of the pivot axis A. The receiving portion 61 and/or portions of the support member 60 may be in sliding contact with the coupling section 211. Accordingly, the support member 60 and the coupling section 211 may overlap each other. The receiving portion 61 comprises a predetermined thickness in extension direction of the pivot axis A and the coupling section 211 comprises a specific thickness in extension direction of the pivot axis A. The engaging member 11 comprises a thickness and is provided at a position so that it may contact the receiving portion 61 and the cam surface 22 on the coupling section 211. For example, the engaging member 11 may comprise a thickness which is larger than one of the receiving portions and the coupling section 211.

The engaging portion 11 may be configured for a play-free engagement. The engaging portion 11 may comprise a wedge shape or a rounded shape. The engaging portion 11 may in addition or alternatively be arranged translatory movable in a direction D which may be skew and/or perpendicular to an extension direction of the pivot axis A.

The hub 30 may further comprise an abutment portion 23 for orienting the first and second hub portions 31, 32 upon movement of one of the first frame assembly 10 and the second frame assembly 20 about the pivot axis A. The abutment portion 23 may be movably coupled to one of the first frame assembly 10 and the second frame assembly 20. In an embodiment, the abutment portion 23 is fixedly coupled to the coupling section 211 of the second frame 200 so as to be integrally rotatable therewith. The abutment portion 23 may be provided on a side of the coupling section 211 on which the support member 60 is arranged. The abutment portion 23 may comprise a cylindrical pin protruding from the coupling section 211.

The abutment portion 23 may be configured to get in contact with and apply a force on a force receiving portion 62 provided on at least one of the first and second hub portions 31, 32, to automatically move the first and second hub portions 31, 32 from a potentially unfavorable position in which a mounted seat structure 3 could interfere with portions of the stroller chassis 2, for example a position in which a portion of the backrest 301 contacts the elongate cross member 803 and blocks an unfolding movement of the third frame assembly 80, to a favorable position, such that the mounted seat structure 3 is at least pre-positioned relative to the chassis 24 and allows a further rotation to an operating position. The force receiving portion 62 may be provided on the support member 60. For example, the force receiving portion 62 may be integrally formed with the support member 60.

The abutment portion 23 may be coupled to the second frame assembly 20 so as to be integrally rotatable therewith about the pivot axis A. The abutment portion 23 may be provided such that, when the first frame assembly 10 and the second frame assembly 20 are locked to each other, for example by means of an engagement of the above engaging member 9 with the engagement portion 112, it defines a rotation stop for the first and second hub portions 31, 32. The abutment portion 23 is positioned such that the receiving portion 61 is aligned with the engaging portion 11 when the first and second hub portions 31, 32 are rotated such that the force receiving portion 62 is in contact with the abutment portion 23. In the embodiment shown in Figure 8, the abutment portion 23 provides a stop for the support member 60, more precisely for the force receiving portion 62, so that a movement of the support member 60 and of a hub portion 31 coupled thereto is prevented in counterclockwise direction. In this way, a play in the locking arrangement 4 is further reduced. As already mentioned before, the engaging direction of the engaging member 11 into the receiving portion 61 may be skew to the pivot axis A. For example, the engaging direction of the engaging member 11 may comprise a directional component which faces in opposite direction to the rotational direction in which the abutment portion 23 does not block a rotation of the support member 60. In other words, the engaging direction of the engaging member 11 may be such that the engaging member 11 may push the support member 60 in a direction of the abutment portion 23. For example, the engaging member 11 may be arranged translatory movable along an axis which in an unfolded and locked condition of the stroller chassis (for example in Figure 8) passes the pivot axis A and the abutment portion 23 above. A combined use of the abutment portion 23 and the specific orientation of the movement direction of the engaging member 11 may couple the hub portion to the stroller chassis 2 without any play between them.

At least one of the hub portions 31, 32 may be configured such that a seat structure 3 mounted to the hub portions 31, 32 does not flap around when the stroller is carried in a folded configuration and the crossbar is positioned at a carrying position. For that, a snapping engagement may be provided between the hub portions 31, 32 and one of the frame assemblies 10, 20 when the hub portions 31, 32 are in a predetermined rotational position relative to the frame assemblies 10, 20, for example in a predetermined rotational position relative to the coupling section 211. For example, the coupling section 211 may comprise at least one, preferably two recesses 24, 25 or openings arranged on opposite sides of the pivot axis A. A springloaded engaging member 70 such as a pin may be provided on the hub portion and may be for example accommodated in a recess 71 so as to be movable in a direction parallel to the pivot axis A and towards and away from the coupling section.

The engaging member 70 may be prebiased towards engagement, for example such that it is pushed on the coupling section 211, more precisely on a surface of the coupling section 211 facing the hub portions, in particular a surface which is perpendicular to the pivot axis A. As soon as one of the recesses 24, 25 is aligned with a position of the engaging member 70, the engaging member 70 may engage with the recess and rotationally lock the hub to the coupling section 211. The engaging member 70 and the recesses may be configured such that a disengagement may be automatically effected by applying a rotational force on one of the coupling sections or the hub, in particular a rotational force that is higher than a predetermined threshold force. In case a predetermined rotation force is applied, the engaging member 70 may be pushed out of the recess. In other words, the recesses and the engaging member may be shaped such that a rotation of the coupling section 211 relative to the hub is transferred into a movement of the engaging member 70 out of the recess 24, 25.

An embodiment is shown in Figure 15 in exploded view. Some of the above-mentioned components and their functions, operative connections and position within the hub may be gathered from this exploded view.

A folding process of a stroller 1 according to an embodiment will be described in the following. First, a user has to take a seated child out of the seat structure 3. After that, the user may operate the operating member 307 to unlock the backrest portion 301 for folding. The user then rotates the backrest portion 301 towards the base portion 300. Upon moving the backrest portion 301 towards the base portion 300, the safety bar arrangement 302 is unlocked and also rotates towards the base portion 300. A state in which the seat structure 3 is in a folded configuration is shown in Figure 4. It is however noted that in the configuration shown in Figure 4, the hub is still locked relative to the stroller chassis 2 and may not rotate relative to the stroller chassis 2. Following this action, the user may now operate the release mechanism 6 to unlock the locking mechanism 5 to allow a rotation of the second frame assembly 20 relative to the first frame assembly 10. The user then rotates the second frame assembly 20 downwards. This movement pushes the engaging member 11 out of engagement with the receiving portion 61 so that the hub portions are unlocked from the stroller chassis 2. As soon as the hub portions are unlocked from the chassis 2, the hub portions are allowed to rotate relative to the stroller chassis 2. It follows that the seat structure 3 rotates downwards to a balancing position in which the folded members of the seat structure point downwards. This rotation of the seat structure together with the hub portions leads to a rotation of the crossbar member 50 to a carrying position. The user may now grasp the crossbar member 50 and the stroller chassis 2 will fully fold to a compact size. In this folded configuration, the engaging member 70 engages with the frame assembly 20 to provide a temporary locking for carrying purposes, in particular such that the folded seat structure may not easily rotate relative to the folded chassis 2. Due to the configuration of the stroller, folding the stroller and unfolding the same may be carried out with only one hand. For unfolding the stroller 1, the user may simply grasp the handle portion 21 and rotate the second frame assembly 20 away from the first frame assembly to a position in which first and second frame assembly are locked by the locking mechanism 5. In this state, the engaging member 11 on the hub is prebiased but not necessarily aligned with the receiving portion 62. The seat structure 3 may now be rotated by a user until the engaging member 11 engages with the receiving portion 62, for example by grasping and moving the backrest portion 301.

In conclusion a, it is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims and their legal equivalents.

### ITEMS:

In the following, possible features and feature combination of the stroller chassis and stroller will be described in the form of items.
I1. Stroller chassis (2) with a hub (30),
   wherein said stroller chassis (2) comprises a first frame assembly (10) and a second frame assembly (20), and wherein said hub (30) is configured to couple said first frame assembly (10) to said second frame assembly (20) pivotably about a pivot axis (A) and releasably lockably with respect to each other, and
   wherein said hub (30) is configured to detachably and lockably support a carrying structure (3) on said chassis (2), and
   wherein said hub (30) is configured to support said carrying structure (3) relative to said chassis (2) pivotably about said pivot axis (A) and lockably in a rotational position.
I2. Stroller chassis (2) with a hub (30),
   wherein said hub (30) is configured to detachably and lockably support a carrying structure (3) on said chassis (2), and
   wherein said hub (30) is configured such that fully unlocking said carrying structure (3) from said hub (30) to allow detachment may be caused by operation of only one release member (43).
I3. Stroller chassis (2) according to item 2,
   wherein said stroller chassis (2) comprises a first frame assembly (10) and a second frame assembly (20), and wherein said hub (30) is configured to couple said first frame assembly (10) to said second frame assembly (20) pivotably about a pivot axis (A) and releasably lockably with respect to each other, and/or
   wherein said hub (30) is configured to support said carrying structure (3) relative to said chassis (2) pivotably about said pivot axis (A) and lockably in a rotational position.
I4. Stroller chassis (2) according to one of items 1 and 3, further comprising a locking mechanism (5) for releasably establishing locking between said first frame assembly (10) and said second frame assembly (20), wherein said locking mechanism (5) may comprise an engaging member (9) for blocking a movement of said second frame assembly (20) relative to said first frame assembly (10), and a release mechanism (6) for at least releasing an engagement between said first frame assembly (10) and said second frame assembly (20), wherein said release mechanism (6) may be provided on said second frame assembly (20) and allows to remotely release an engagement between said first frame assembly (10) and said second frame assembly (20), wherein said release mechanism (6) may be operatively coupled to said locking mechanism (5) by means of a force transfer member (7), wherein said force transfer member (7) may comprise a wire (8), wherein said second frame assembly (20) may comprise a handle portion (21) graspable by a user and said release mechanism (6) may be provided in said handle portion (21).
I5. Stroller chassis (2) according to one of the preceding items, wherein said hub (30) comprises a first hub portion (31) and a second hub portion (32) arranged at a distance from each other and configured to support said carrying structure (3) between them, wherein said hub (30) may comprise a locking arrangement (40) for releasably locking said carrying structure (3) on said first hub portion (31) and said second hub portion (32), wherein said locking arrangement (40) is configured such that a locking of said carrying structure (3) on said first hub portion (31) and said second hub portion (32) can at least be simultaneously released.
I6. Stroller chassis (2) according to item 5, wherein said locking arrangement (40) comprises a first engaging mechanism (41) provided in said first hub portion (31) and a second engaging mechanism (42) provided in said second hub portion (32), wherein said locking arrangement (40) may comprise said release member (43) operable by a user, wherein said release member (43) may be configured to return to a locking position by means of a return mechanism (46), preferably comprising a return spring (47), and which release member (43) is operatively coupled to said first engaging mechanism (41) and said second engaging mechanism (42), for example by means of a force transfer mechanism (44), wherein said force transfer mechanism (44) may comprise a wire (45), such that an operation of said release member (43) simultaneously releases an engagement in both engaging mechanisms (41, 42), wherein said release member (43) may be provided on one of said first hub portion (31) and said second hub portion (32).
I7. Stroller chassis (2) according to one of the preceding items, wherein said hub (30) further comprises a crossbar member (50), wherein said crossbar member (50) may be configured to at least partially accommodate said force transfer mechanism (44), for example said wire (45), and/or wherein said crossbar member (50) may comprise a gripping handle (51) graspable by a user for carrying the stroller (1), and/or wherein said crossbar member (50) may be integrally formed with said first hub portion (31) and said second hub portion (32) and/or wherein said crossbar member (50) may be U-shaped.
I8. Stroller chassis (2) according to one of the preceding items, wherein said hub (30) is configured to be positively couplable with a coupling portion (303) of said carrying structure in such a manner that a movement of said hub (30) and said coupling portion (303) relative to each other for moving the same to a final coupling position is at least partially carried out against an urging force applied by an urging member (38).
I9. Stroller chassis (2) according to one of the preceding items, wherein said hub (30) may be configured with a first hub portion (31) and a second hub portion (32), wherein said first hub portion (31) is configured to be positively couplable with a first coupling section (304) of said carrying structure (3) and said second hub portion (32) is configured to be positively couplable with a second coupling portion of said carrying structure (3) in such a manner that a movement of the respective hub portions (31, 32) and the respective coupling portions relative to each other for moving the same to a final coupling position is at least partially carried out against an urging force applied by an urging member (38), wherein each of said first hub portion (31) and said second hub portion (32) may comprise said urging member (38), for example a spring mechanism, wherein each urging member (38) is configured to apply an urging force on a respective one of said coupling sections (304) in decoupling direction, wherein said urging members (38) are configured to provide a joint urging force which is higher than the weight force of said carrying structure (3) so that the urging force needs to be overcome to move said coupling sections (304) relative to the hub portions (31, 32) to said final coupling position.
I10. Stroller chassis (2) according to one of the preceding items, wherein said hub (30) comprises a first hub portion (31) and a second hub portion (32), wherein each of said first hub portion (31) and said second hub portion (32) is arranged lockably rotatable relative to said chassis (2) about said pivot axis (A), and/or wherein unlocking of said first hub portion (31) and said second hub portion (32) to allow a rotation of the same is effected by a movement of one of said first frame assembly (10) and said second frame assembly (20) with respect to the other one about said pivot axis (A).
I11. Stroller chassis (2) according to one of the preceding items,
   comprising a locking arrangement (4) for rotationally locking said hub (30), in particular each of said first hub portion (31) and said second hub portion (32) to at least one of said first frame assembly (10) and said second frame assembly (20), each locking arrangement (4) comprising an engaging portion (11), which may be arranged on said first frame assembly (10), and a receiving portion (61) which may be arranged on said first hub portion (31) and said second hub portion (32) respectively, wherein said engaging portion (11) is movable, for example translatory movable, between an engaging position in which said engaging portion (11) is in engagement with said receiving portion (61) thereby blocking any rotational movement between said engaging portion (11) and said receiving portion (61), and a disengaging position in which said receiving portion (61) is able to rotate about said pivot axis (A) relative to said engaging portion (11), and/or
   further comprising a force transfer mechanism (90) operatively coupled to said engaging portion (11) to apply a force on said engaging portion (11) for moving the same at least from said engaging position to said disengaging position, wherein said force transfer mechanism (90) may be configured to transfer a rotational movement (P) of one of said first frame assembly (10) and said second frame assembly (20) about said pivot axis (A) and relative to the other one of said frame assemblies, into a movement (T), for example a translatory movement, of said engaging portion (11), wherein said force transfer mechanism (90) may comprise a cam surface (22) extending about said pivot axis (A) and said engaging portion (11) may comprise an abutment portion (13) configured to get in contact with said cam surface (22), wherein said engaging portion (11) may be pretensioned towards engagement by means of an urging member (12), for example a spring, wherein said engaging portion (11) may be configured for a play-free engagement and may comprise a wedge shape or a rounded shape and/or wherein said engaging portion (11) may be arranged translatory movable in a direction (D) which is skew to an extension direction of said pivot axis (A).
I12. Stroller chassis (2) according to one of items 5 to 11, wherein said hub (30) further comprises an abutment portion (23) for orienting said first and second hub portions (31, 32) upon movement of one of said first frame assembly (10) and said second frame assembly (20) about said pivot axis (A), wherein said abutment portion (23) may be movably coupled to one of said first frame assembly (10) and said second frame assembly (20) and may be configured to get in contact with and apply a force on a force receiving portion (62) provided on at least one of said first and second hub portions (31, 32), to automatically move said first and second hub portions (31, 32) from a potentially unfavorable position in which a mounted carrying structure (3) could interfere with portions of said stroller chassis (2) to a favorable position, such that said mounted carrying structure (3) is at least prepositioned relative to said chassis (2) for further rotation to an operating position, wherein said abutment portion (23) may be coupled to said second frame assembly (20) so as to be integrally rotatable therewith about said pivot axis (A).
I13. Stroller chassis (2) according to item 12, wherein said abutment portion (23) is provided such that, when said first frame assembly (10) and said second frame assembly (20) are locked to each other, it defines a rotation stop for said first and second hub portions (31, 32) such that said receiving portion (61) is aligned with said engaging portion (11) when said first and second hub portions (31, 32) are rotated such that said force receiving portion (62) is in contact with said abutment portion (23).
I14. Stroller (1) comprising a stroller chassis (2) according to one of the preceding items and a carrying structure (3) detachably mountable to said hub (30).

## Claims

1. Stroller chassis (2) with a hub (30),
wherein said hub (30) is configured to detachably and lockably support a carrying structure (3) on said chassis (2), and
wherein said hub (30) is configured such that fully unlocking said carrying structure (3) from said hub (30) to allow detachment may be caused by operation of only one release member (43) of the chassis.

2. The stroller chassis (2) according to claim 1, wherein said hub (30) comprises:
a first hub portion (31) and a second hub portion (32) arranged at a distance from each other and configured to support said carrying structure (3) between them,
wherein said hub (30) comprises a locking arrangement (40) for releasably locking said carrying structure (3) on said first hub portion (31) and said second hub portion (32).

3. Stroller chassis (2) according to claim 2, wherein said locking arrangement (40) is configured such that a locking of said carrying structure (3) on said first hub portion (31) and said second hub portion (32) can at least be simultaneously released.

4. Stroller chassis (2) according to any one of claims 1 to 3, wherein the release member (43) is arranged on only one side of the stroller chassis (2).

5. Stroller chassis (2) according to claim 4 when dependent on claim 2, wherein the single release member (43) is disposed on the first hub portion (31) or the second hub portion (32).

6. Stroller chassis (2) according to any one of the preceding claims, wherein said hub (30) is configured to be positively couplable with a coupling portion (303) of said carrying structure in such a manner that a movement of said hub (30) and said coupling portion (303) relative to each other for moving the same to a final coupling position is at least partially carried out against an urging force applied by an urging member (38).

7. Stroller chassis (2) according to claim 6, wherein a release member (43) is provided on both sides of the stroller chassis (2).

8. The stroller chassis (2) according to claim 2, wherein the locking arrangement (40) comprises a first engaging mechanism (41) provided in the first hub portion (31) and a second engaging mechanism (42) provided in the second hub portion (32), the first engaging mechanism (41) and the second engaging mechanism (42) each comprising an engaging portion (48) moveable from an engaging position where it prevents carrying structure (3) from being detached from the chassis (2) and a retracted position where it allows the carrying structure (3) to be detached from the chassis (2), wherein the first engaging mechanism (41) and the second engaging mechanism (42) are operatively coupled to each other by means of a force transfer mechanism (44).

9. The stroller chassis (2) according to claim 8, wherein said release member (43) is configured to return to a locking position by means of a return mechanism (46), preferably comprising a return spring (47).

10. Stroller chassis (2) according to any one of the preceding claims,
wherein said stroller chassis (2) comprises a first frame assembly (10) and a second frame assembly (20), and wherein said hub (30) is configured to couple said first frame assembly (10) to said second frame assembly (20) pivotably about a pivot axis (A) and releasably lockably with respect to each other, and/or
wherein said hub (30) is configured to support said carrying structure (3) relative to said chassis (2) pivotably about said pivot axis (A) and lockably in a rotational position.

11. Stroller chassis (2) according to claim 8, wherein said locking arrangement (40) comprises said release member (43) operable by a user, wherein said force transfer mechanism (44) may comprise a wire (45), such that an operation of said release member (43) simultaneously releases an engagement in both engaging mechanisms (41, 42), wherein said release member (43) may be provided on one of said first hub portion (31) and said second hub portion (32).

12. Stroller chassis (2) according to claim 11, wherein said hub (30) further comprises a crossbar member (50), wherein said crossbar member (50) may be configured to at least partially accommodate the force transfer mechanism (44).

13. Stroller chassis (2) according to claim 6 when dependent on claim 2, wherein said first hub portion (31) is configured to be positively couplable with a first coupling section (304) of said carrying structure (3) and said second hub portion (32) is configured to be positively couplable with a second coupling portion of said carrying structure (3), wherein each of said first hub portion (31) and said second hub portion (32) may comprise said urging member (38), for example a spring mechanism, wherein each urging member (38) is configured to apply an urging force on a respective one of said coupling sections (304) in decoupling direction, wherein said urging members (38) are configured to provide a joint urging force which is higher than the weight force of said carrying structure (3) so that the urging force needs to be overcome to move said coupling sections (304) relative to the hub portions (31, 32) to said final coupling position.

14. Stroller chassis (2) according to claim 2, wherein each of said first hub portion (31) and said second hub portion (32) is arranged lockably rotatable relative to said chassis (2) about said pivot axis (A), and/or wherein unlocking of said first hub portion (31) and said second hub portion (32) to allow a rotation of the same is effected by a movement of one of said first frame assembly (10) and said second frame assembly (20) with respect to the other one about said pivot axis (A).

15. Stroller (1) comprising a stroller chassis (2) according to one of the preceding claims and a carrying structure (3) detachably mountable to said hub (30).
